Europäisches Patentamt

European Patent Office

Office européen des brevets

(19)

(11)  EP 1 302 803 A2

(12)  **EUROPÄISCHE PATENTANMELDUNG**

(43) Veröffentlichungstag:
**16.04.2003  Patentblatt 2003/16**

(51) Int Cl.⁷: $G02B\ 21/00$

(21) Anmeldenummer: **02020863.3**

(22) Anmeldetag: **18.09.2002**

| | |
|---|---|
| (84) Benannte Vertragsstaaten:<br>**AT BE BG CH CY CZ DE DK EE ES FI FR GB GR IE IT LI LU MC NL PT SE SK TR**<br>Benannte Erstreckungsstaaten:<br>**AL LT LV MK RO SI** | (72) Erfinder:<br>• **Wolleschensky, Ralf**<br> **99510 Schöten (DE)**<br>• **Kempe, Michael, Dr.**<br> **07751 Kunitz (DE)** |
| (30) Priorität: **09.10.2001  DE 10150934** | (74) Vertreter: **Hampe, Holger**<br>**Carl Zeiss Jena GmbH,**<br>**Zentralbereich Recht und Patente,**<br>**Patentabteilung**<br>**07740 Jena (DE)** |
| (71) Anmelder: **CARL ZEISS JENA GmbH**<br>**07745 Jena (DE)** | |

(54)  **Verfahren und Anordnung zur tiefenaufgelösten Erfassung von Proben**

(57)  Anordnung eines optischen Modulators zur schnellen Modulation in einem Interferometerarm einer Interferometeranordnung zur Heterodyndetektion wobei vorteilhaft der Modulator im Meßarm des Interferometers angeordnet ist und gleichzeitig zur Schaltung und/ oder Strahlabschwächung in einem Laser-Scanning- Mikroskop dient, oder der Modulator im Referenzarm des Interferometers angeordnet ist und der Meßarm der Beleuchtungsstrahlengang eines Laser- Scanning - Mikroskopes ist .

Abbildung                                          2

**Beschreibung**

Die Erfindung bezieht sich insbesondere auf ein Verfahren und eine Anordnung in der Mikroskopie, insbesondere der Laser Scanning Mikroskopie zur Untersuchung sowie Manipulation von vorwiegend biologischen Proben, Präparaten und zugehörigen Komponenten..

**Stand der Technik**

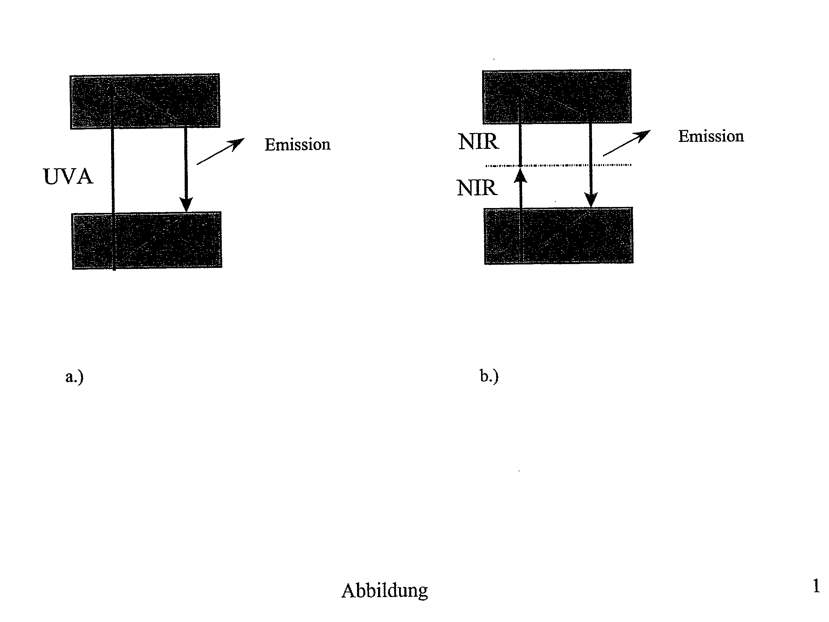

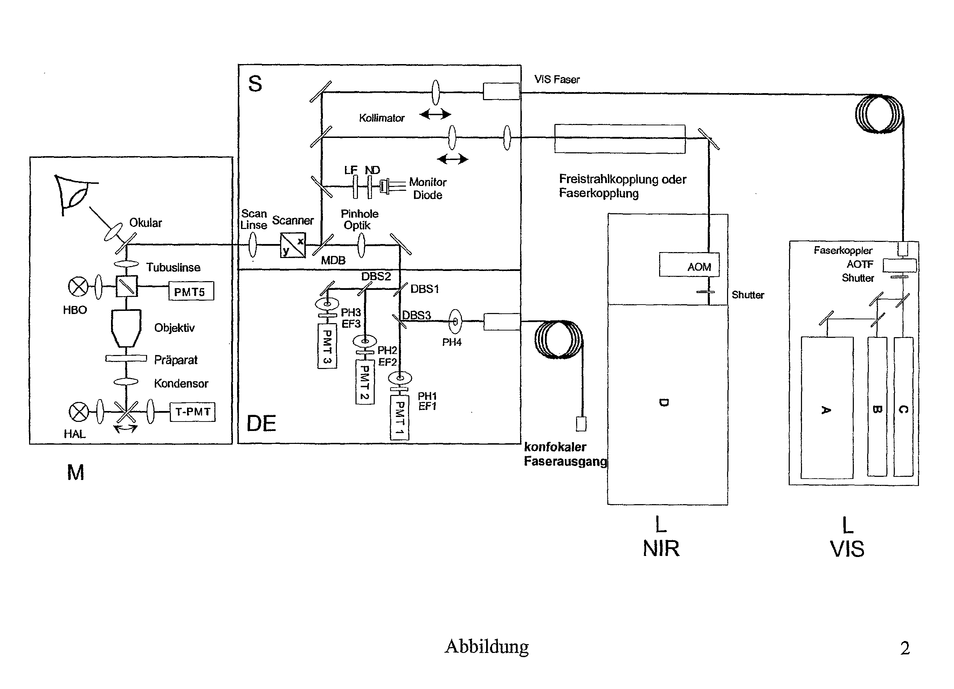

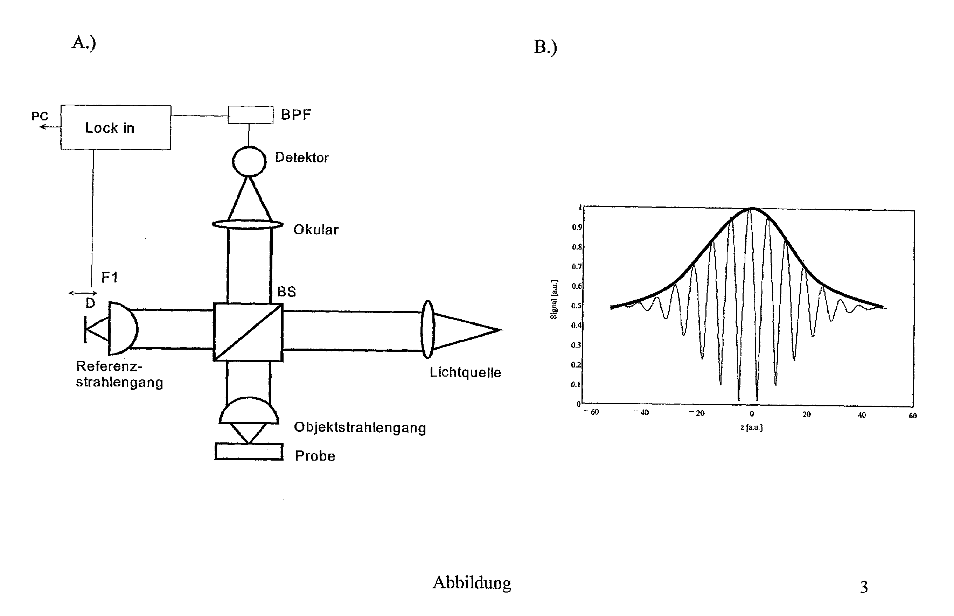

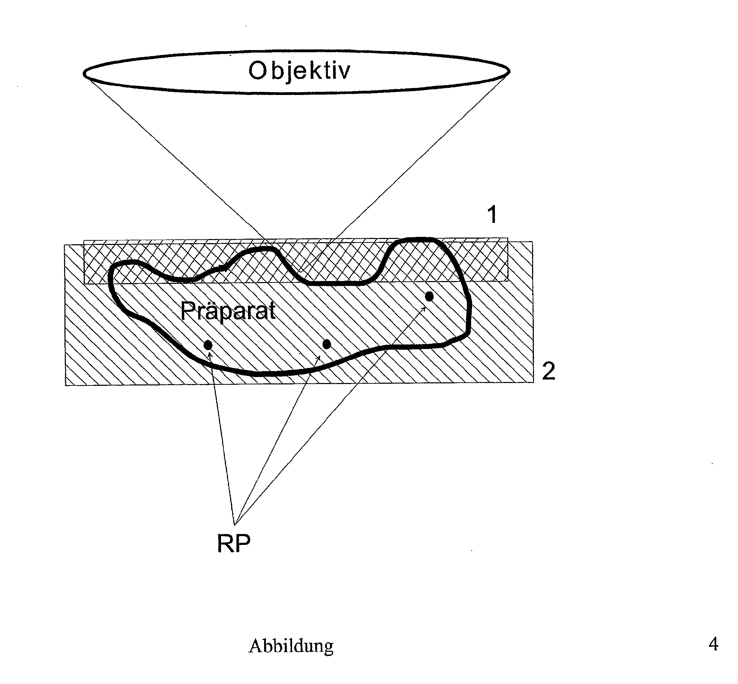

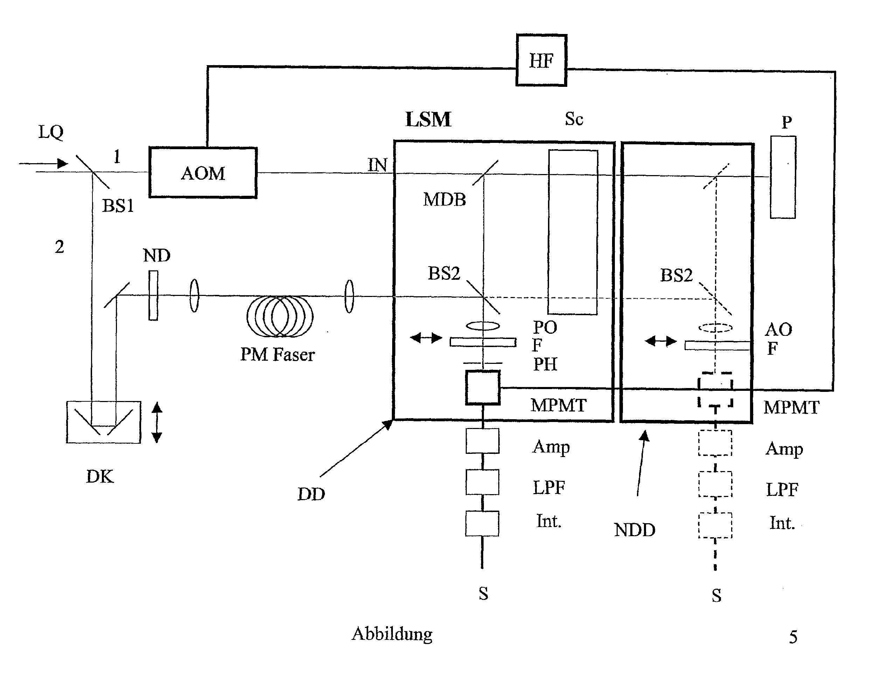

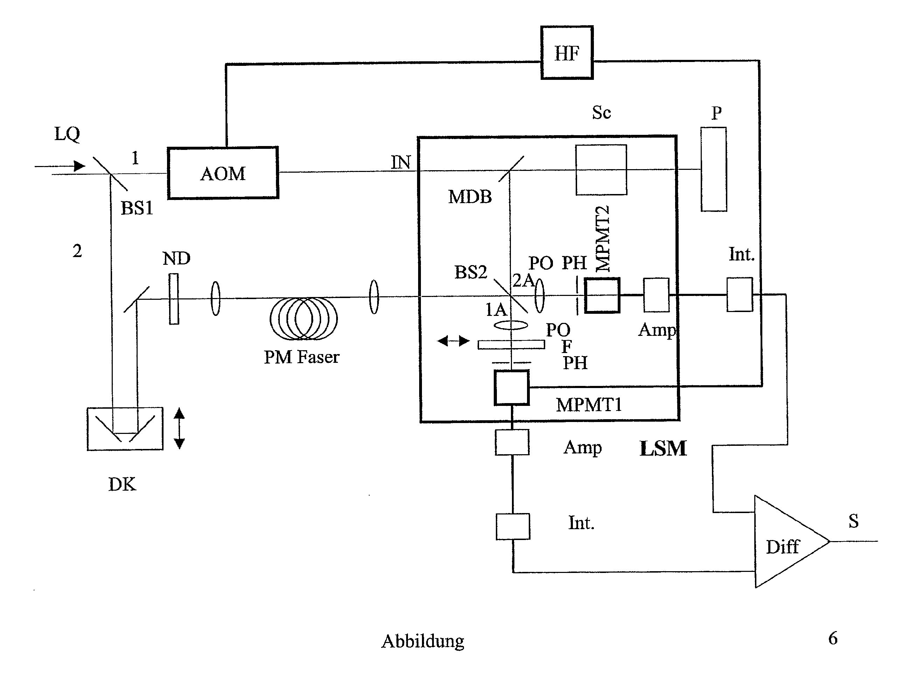

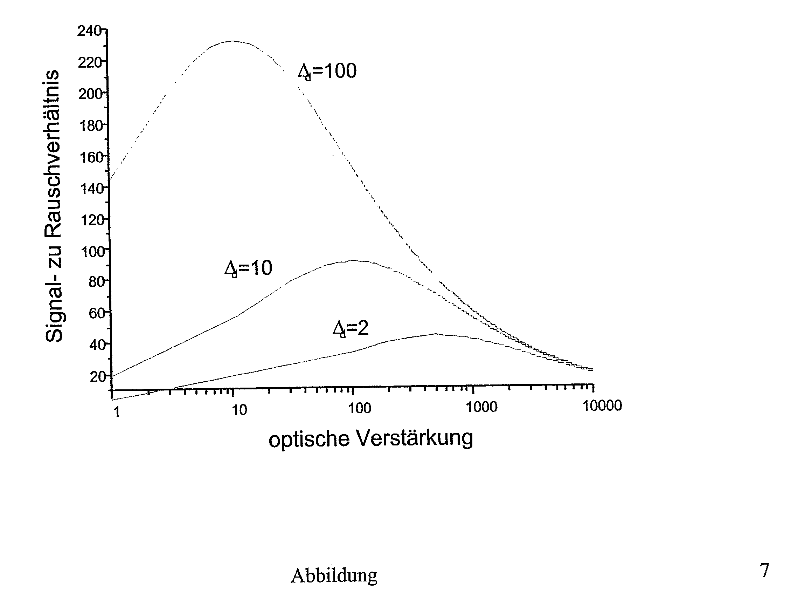

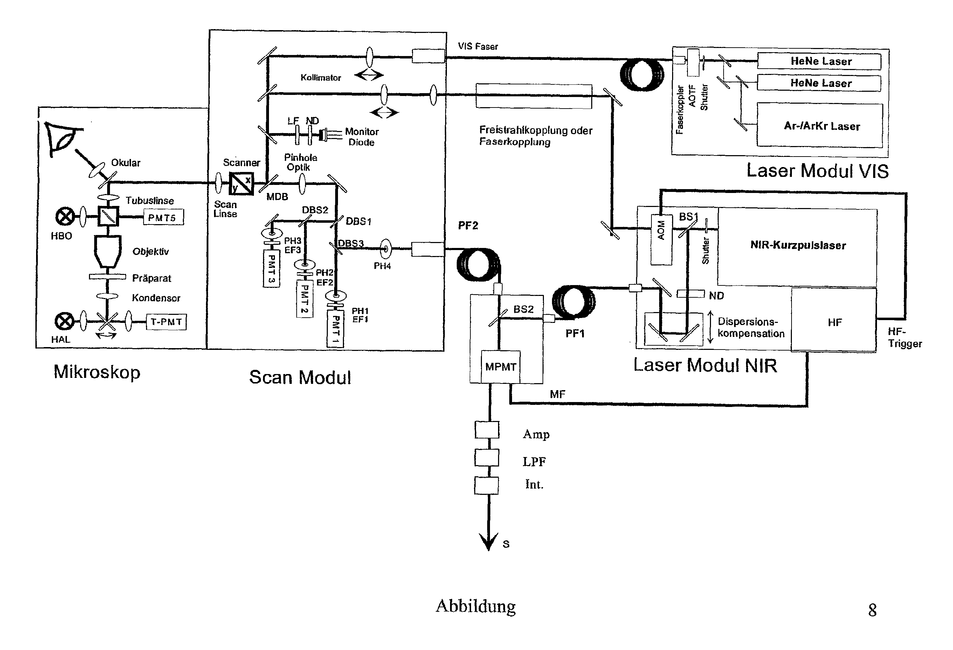

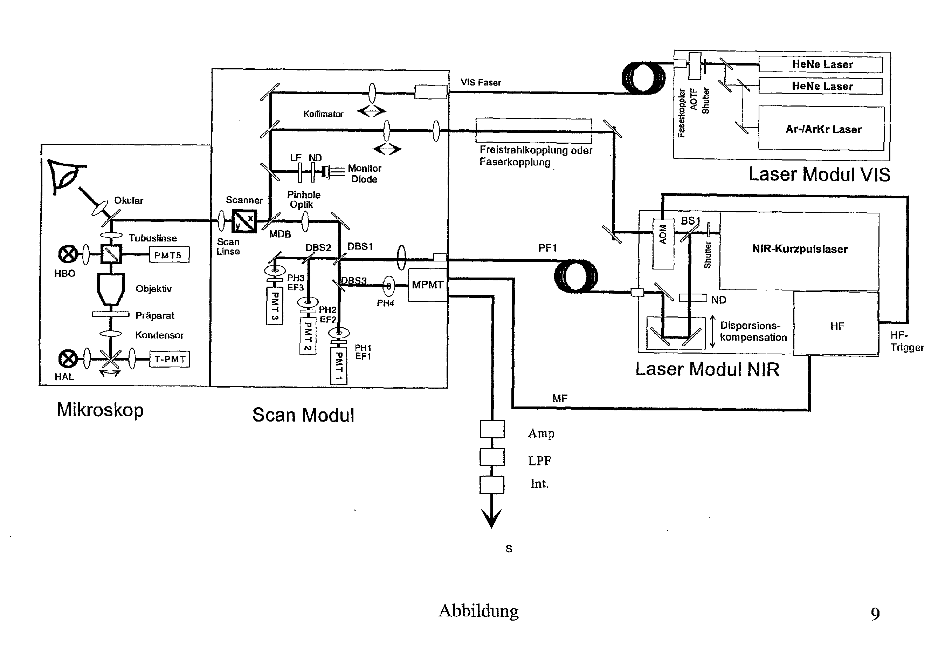

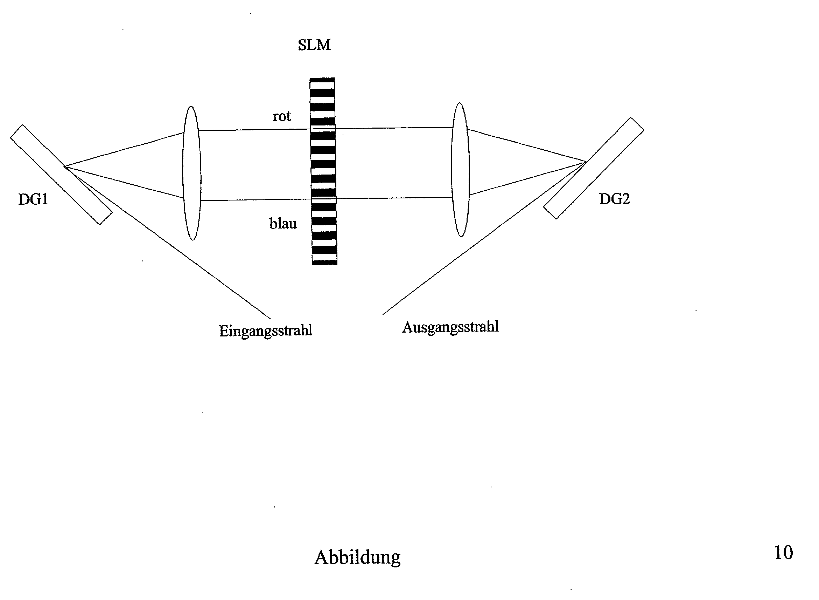

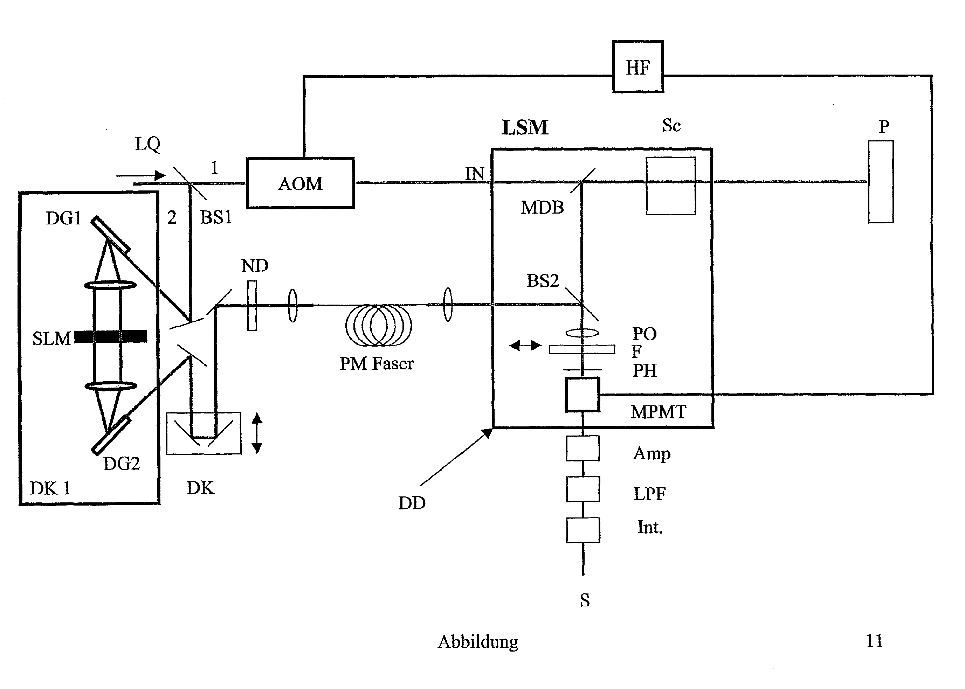

Ein klassisches Anwendungsgebiet der Lichtmikroskopie zur Untersuchung von biologischen Präparaten ist die Fluoreszenzmikroskopie (Lit.: Pawley, "Handbook of Biological Confocal Microscopy"; Plenum Press 1995). Hierbei werden bestimmte Farbstoffe zur spezifischen Markierung von Zellteilen verwendet.
Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet (Abb. 1a). Die so angeregten Farbstoffmoleküle können auf verschiedene Weise in den Grundzustand zurück gelangen. In der Fluoreszenzmikroskopie ist der Übergang unter Aussendung eines Fluoreszenzphotons am wichtigsten. Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.
Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner, mit verschiedenen Farbstoffen eingefärbten Zellteilen möglich. Grundsätzlich können jedoch auch mehrere Teile eines Präparates gleichzeitig mit verschiedenen sich spezifisch anlagernden Farbstoffen eingefärbt werden (Mehrfachfluoreszenz). Zur Unterscheidung der von den einzelnen Farbstoffen ausgesendeten Fluoreszenzsignale werden wiederum spezielle dichroitische Strahlteiler verwendet.
Neben der Anregung der Farbstoffmoleküle mit einem hochenergetischen Photon (Einphotonen-Absorption) ist auch eine Anregung mit mehreren Photonen geringerer Energie möglich (Abb. 1b). Die Probenwechselwirkung ist in diesem Falle nichtlinear. Die Summe der Energien der Einzelphotonen entspricht hierbei ungefähr der des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Abb. 1b zeigt eine Anregung mittels der simultanen Absorption von 2 Photonen im nahen infraroten Wellenlängenbereich. Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungs- von der Emissionsstrahlung erfolgt in der gleichen Art und Weise wie bei der Einphotonen-Absorption.
Der Stand der Technik soll im folgenden beispielhaft anhand eines konfokalen Laser-Scanning-Mikroskopes (LSM) erläutert werden (Abb. 2).
Ein LSM gliedert sich im wesentlichen in 4 Module: Lichtquelle L, Scanmodul S, Detektionseinheit DE und Mikroskop M. Diese Module werden im folgenden näher beschrieben. Es wird zusätzlich auf DE19702753A1, US6167173 verwiesen.
Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul L erzeugt. Zum Einsatz kommen hierbei verschiedene Laser A-D (Argon, Argon Krypton, TiSa-Laser). Weiterhin erfolgt im Lichtquellenmodul L die Selektion der Wellenlängen und die Einstellung der Intensität der benötigten Anregungswellenlänge, z.B. durch den Einsatz eines akusto-optischen Modulators. Anschließend gelangt die Laserstrahlung über eine Faser oder eine geeignete Spiegelanordnung in das Scanmodul S . Die in der Lichtquelle L erzeugte Laserstrahlung wird mit Hilfe des Objektivs (2) beugungsbegrenzt über die Scanner, die Scan Lens und die Tubuslinse in das Präparat ((Probe 3) fokussiert. Der Fokus wird rasterförmig in x-y-Richtung über die Probe 3 bewegt. Die Pixelverweilzeiten beim Scannen über die Probe 3 liegen meist im Bereich von weniger als einer Mikrosekunde bis zu einigen Sekunden.
Bei einer konfokalen Detektion (descannte Detektion) des Fluoreszenzlichtes gelangt das Licht, das aus der Fokusebene (Probe 3 ) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht über dichroitische Strahlteiler DBS 1-3 und Pinholeoptiken auf eine Blende (konfokale Blende / Pinhole) (PH1,2,3,4) fokussiert, die sich genau in einer zur Fokusebene des Objektivs 2 konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dichroitischer Blockfilter (EF1-4) der nochmals die Anregungsstrahlung unterdrückt. Nach Passieren des Blockfilters wird das Fluoreszenzlicht mittels eines Punktdetektors (PMT1-4) gemessen.

Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion über T-PMT , PMT 5 kann in Detektionsrichtung direkt nach dem Objektiv oder auf der dem Objektiv abgewandten Seite erfolgen (non descannte Detektion).

In einer weiteren Anordnung zur Detektion (nicht dargestellt) einer durch Mehrphotonenabsorption angeregten Farbstofffluoreszenz erfolgt weiterhin eine descannte Detektion, jedoch wird diesmal die Pupille des Objektives von der Pinholeoptik PH in die Detektionseinheit abgebildet (nichtkonfokal descannte Detektion).

Von einem dreidimensional ausgeleuchteten Bild wird durch die geschilderten Detektionsanordnungen in Verbindung mit der entsprechenden Einphotonen bzw. Mehrphotonen-Absorption nur die Ebene (optischer Schnitt) wiedergegeben, die mit der Fokusebene des Objektivs zusammenfällt. Durch die Aufzeichnung mehrerer optische Schnitte in der x-y Ebene in verschiedenen Tiefen z der Probe kann anschließend rechnergestützt ein dreidimensionales Bild der Probe generiert werden.

Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, dass nur das vom jeweiligen Farbstoff ausgesendete Fluoreszenzlicht vom Punktdetektor gemessen wird.

Nachteilig bei den konfokalen LSM Verfahren nach dem Stand der Technik ist, dass die Eindringtiefe in ein biologisches Präparat aufgrund der Starken Signalverluste auf der Anregungs- und Detektionsseite auf ca. max. 500µm beschränkt wird (siehe Abb. 4 (1)). Es kann somit beispielsweise bei einem dicken Präparat immer nur die äußere Schale des Objektes mit Hilfe des LSM untersucht werden.

Das Prinzip der Hetrodyndetektion in der Scanning Mikroskopie wurde in "T. Sawatari: Optical heterodyne scanning microscope. Applied Optics 12(1973), 2768-2772" vorgestellt. Im wesentlichen besteht die optische Anordnung aus einen Michelson Interferometer. Licht einer im allgemeinen spektral breitbandigen Lichtquelle (siehe Abb. 3A) wird an einem Strahlteiler (BS) in 2 Teilstrahlen aufgeteilt. Ein Teilstrahl tastet die Probe im Objektstrahlengang ab. Der zweite Teilstrahl dient als Referenzarm. Das von der Probe rückgestreute Licht wird an-BS wieder mit Licht des Referenzstrahlengangs interferometrisch überlagert. Durch eine Verschiebung des Spiegels M entlang D kann die optische Weglänge zwischen den beiden Teilstrahlen abgeglichen werden. Das Licht im Referenzstrahlengang wird frequenzverschoben gegenüber dem Licht im Objektstrahlengang. Dies kann durch eine Phasenmodulation durch ein spezielles Bauelement oder durch die Bewegung des Spiegels M (d.h. durch Dopplerverschiebung) erfolgen. Der Detektor mißt das im Teilbild B dargestellte Signal in Abhängigkeit von der Verschiebung D Das Signal S wird demoduliert, um die Einhüllende des Interferenzsignals zu erhalten, welche durch die spektrale Charakteristik der Lichtquelle, die Dispersionsimbalance in den Interferometerarmen und die numerische Apertur des Mikroskopobjektivs im Objektstrahlengang bestimmt wird. Eine solche Demodulation kann z.B. phasenunempfindlich durch eine Gleichrichtung und anschließende Tiefpassfilterung erfolgen. Alternativ kann die Demodulation auch phasenempfindlich in einem Lock in Verstärker nach Gleichrichtung des Signals erfolgen, wobei der Lock-ln mit dem Treibersignal der Phasenmodulation als Referenz getriggert wird. Eine Analyse eines Laserrastermikroskops mit Hetrodyndetektion ist in "M. Kempe and W. Rudolph: Analysis of heterodyne and confocal microscopy for illumination with broad-bandwidth light. J. of Mod. Opt. 43(1996), 2189-2204" beschrieben. Für eine Lichtquelle mit Gaußschem Spektrum mit Bandbreite $\delta\omega$ und Mittenfrequenz $\omega_0$ und ein Objektiv mit halbem Aperturwinkel $\alpha$ sowie ein lateral homogenes, dünnes Objekt ergibt sich bei vollständiger Dispersionsbalance als Einhüllende:

$$S(z) \approx 1 - \frac{2}{3}k^2 z^2 \left( \sin^4(\alpha/2) + \frac{\delta\omega}{\omega_0} \right) \tag{1}$$

Für hohe numerische Aperturen und geringer Bandbreite des Lichtes ist die optische Auflösung durch die konfokale Tiefendiskriminierung gekennzeichnet Im allgemeinen wird die Heterodyndetektion diese verbessern.

Der Vorteile der Heterodyndetektion gegenüber klassischer Detektion in einem konfokalen LSM im Auflicht sind die folgenden:

■ Es kommt zu einer optischen Verstärkung des rückgestreuten, ballistischen Lichts. Dadurch kann eine in Bezug auf das Signal schrotrauschbegrenzte Detektion erfolgen ("H.P. Yuen and V.W.S. Chan: Noise in homodyne and heterodyne detection. Optics Letters 8(1983), 177-179").

■ Die interferometrische Überlagerung von Objekt- und Referenzstrahlung führt bei breitbandigem Licht zur Verbesserung der räumlichen Auflösung falls die konfokale Tiefenauflösung wegen geringer NA oder wegen Aberrationen schlechter ist als die Kohärenzlänge des Lichtes ("M. Kempe and W. Rudolph: Scanning microscopy through thick layers based on linear correlation. Optics Letters 19(1994), 1919-1921").

■ Der gleiche Effekt führt zur Unterdrückung des rückgestreuten, nichtballistischen Lichts (Kohärenztor zusätzlich zum räumlichen Tor durch die inhärent konfokale Detektion) ("Joseph A. Izatt, Michael R. Hee, Gabrielle M. Owen, Eric A. Swanson, James G. Fujimoto: Optical coherence microscopy in scattering media. Optics Letters 19(1994), 590-592; J.M. Schmitt and K. Ben-Letaief: Efficient Monte Carlo simulation of confocal microscopy in biological tissue. JOSA A 13(1996), 952-961; M. Kempe, W. Rudolph, E. Welsch: Comparative study of confocal and heterodyne microscopy for imaging through scattering media. JOSA A 13(1996), 46-52").

Nachteilig bei der Heterodyndetekton nach dem Stand der Technik ist, dass im Gegensatz zum LSM eine hohe Eindringtiefe in eine biologische Probe realisiert, jedoch die Probe nur in Reflexion untersucht werden kann. Eine Untersuchung der Probe in Fluoreszenz ist nicht möglich. Aus der Literatur sind jedoch Eindringtiefen in stark streuende biologische Präparate von mehreren Millimetern bekannt (siehe RP in Abb. 4 (2)). Es ist somit möglich beispielsweise einen Embryo während seiner Entwicklungsphase räumlich aufgelöst zu untersuchen.

Aufgabe der Erfindung ist die Schaffung einer Methode mit der insbesondere dynamische Prozesse während des Wachstums von biologischen Präparaten untersucht werden können. Diese Aufgabe wird durch Anordnungen und Verfahren gemäß den unabhängigen Patentansprüchen gelöst. Bevorzugte Weiterbildungen sind Gegenstand der abhängigen Ansprüche.

Erfindungsgemäß werden werden Regionen, die mit dem LSM in Fluoreszenz oder Reflexion untersucht werden können zu Regionen RP tief im Objekt mit Hilfe der Heterodyndetektion(HTD) referenziert (siehe Abb. 4), indem ein Bezug eines konfokalen LSM Bildes zur HTD Struktur hergestellt wird.

Die erfindungsgemäße Anordnung ist schematisch in Abb. 5 dargestellt. Hier beinhaltet sie ein Mach-Zehnder Interferometer. Das Mach Zehnder Interferometer kann prinzipiell auch durch andere Interferometertypen nach dem Stand der Technik wie Michelson Interferometer ohne Einschränkung ersetzt werden. Hierin wird das kurzkohärente Licht der Lichtquelle LQ, beispielsweise eines Kurzpulslasers, mit Hilfe des Strahlteilers BS1 in 2 Teilstrahlen 1,2 zerlegt.

Der Teilstrahl 1 gelangt durch einen akusto optischen Modulator AOM (oder AOTF) in ein Laser Scanning Mikroskop LSM nach dem Stand der Technik. Im LSM wird das Licht über den Hauptstrahlteiler MDB und die Scanner SC in die Probe P abgebildet. Mit Hilfe der Scanner kann die Probe senkrecht zu optischen Achse in zwei Richtungen X,Y abgetatstet werden. Eine Z Koordinate wird über die Z Verstellung der Probe gewährleistet. Das von der Probe rückgestreute Licht wird vom MDB in Richtung des Strahlteilers BS2 und der Detektion gelenkt. Der MDB wird hierbei zur nicht descannten Detektion (NDD) , gestrichelt gezeichnet ,vor den Scannern (SC) bzw. zur descannten Detektion (DD) , nach dem Scanner (SC) angeordnet. Der Teilstrahl 2 gelangt über eine Dispersionskompensation DK, Mittel zur Anpassung der Intensität ND (Anpassung der optischen Verstärkung) und eine Delaystrecke, z.B. eine polarisationserhaltende (PM) Faser ebenfalls auf BS2. Beide Teilstrahlen überlagern sich an BS2 interferometrisch. Mit Hilfe der Delaystrecke erfolgt ein grober Abgleich der optischen Weglängen der beiden Teilstrahlenzur Kompensation der Wirkung der Optik im Mikroskopstrahlengang 1 gegenüber Strahlengang 2. Die Feinabstimmung der Weglänge wird mit DK sichergestellt, so dass die optischen Wege und günstigerweise auch die Dispersion für beide Teilstrahlen identisch sind und eine interferometrische Überlagerung der beiden Teilstrahlen erfolgt. DK kann wie in Abb. 5 gezeigt durch einen Retroreflektor oder durch die weiter unten beschriebene Anordnung mit einem Spatial Light Modulator (SLM) erfolgen. Die Feinabstimmung ist beispielsweise bei einem Wechsel des Objektivs oder zur Kompensation der Dispersion im Objekt erforderlich. BS1 und BS2 sind so ausgelegt, dass der Teilstrahl 1 möglichst effizient in Richtung Probe bzw. nach Wechselwirkung im Objekt zum Detektor MPMT gelangt.

Hierzu wird nur ein kleiner Teil, vorzugsweise weniger als 5% , der Strahlung durch BS1 in Richtung Strahlengang 2 abgelenkt, um einen hohen Strahlungsanteil auf die Probe zu leiten.

BS2 ist vorzugsweise so ausgelegt, daß möglichst viel Licht der Probe aus dem Strahlengang 1 zur Erhöhung der Nachweisempfindlichkeit auf den Detektor gelangt ( vorzugsweise mehr als etwa 99%).

BS2 nachgeordnet ist bei einer descannten Detektion (DD) eine Pinholeoptik PO, die durch ein konfokales Pinhole PH auf einen Detektor MPMT fokussiert. Das Pinhole dient der Unterdrückung von Streulicht und von Licht von außerhalb des konfokalen Fokus. Dadurch wird verhindert, dass der Detektor durch Streulicht gesättigt wird. Die konfokale Blende kann jedoch bei der Heterodyndetektion vorzugsweise z.B. in einem nicht descannten Strahlengang (NDD) entfallen. Die Abbildung des Teilstrahls 1 auf den MPMT bei nicht descannter Detektion NDD erfolgt mit einer Optik AO. Bei einer nicht descannten Detektion NDD muß zusätzlich auch der Referenzstrahl über die Scanner laufen, so dass an BS2 sich beide Strahlengänge wieder räumlich überlagern können.

Zusätzlich kann vor dem MPMT auch ein Emissionsfilter F eingeschwenkt werden. Dieser dient der Detektion von Fluoreszenzsignalen mit dem MPMT. Der AOM dient im LSM der Abschwächung des Teilstrahles 1. Im AOM wird hierzu eine stehende akusto optische Welle - ein Bragg Gitter - erzeugt. Die Abschwächung erfolgt durch eine Änderung der Amplitude der Welle. Zu Einkopplung in das LSM gelangt die erste Beugungsordnung des Lichtes an dem Bragg Gitter. Durch den akusto optischen Effekt wird die Brechzahl im Kristall periodisch mit der Trägerfrequenz der akusto optischen Welle verändert. Die Trägerfrequenz F1 beträgt normalerweise einige 100 MHz. Durch diese Brechzahländerung im MHZ Bereich erfolgt eine schnelle Phasenverschiebung des Teilstrahls 1 in Bezug auf den Teilstrahl 2. Diese Phasenverschiebung entspricht der schnellen Modulation des Referenzstrahlenganges durch die Verschiebung D in Abb. 3 nach dem Stand der Technik, ersetzt diese also. Jedoch ist die Frequenz in diesem Falle vorteilhaft um ca. einen Faktor 1000 höher, wodurch prinzipiell die Meßzeiten zur Aufnahme eines Meßpunktes um einen Faktor 1000 verringert werden können.

Die Demodulation des Signals erfolgt mit Hilfe eines mit F1 modulierbaren Detektors DE , z.B. Photomultiplier Hamamatsu H6573 (MPMT). Dieser besitzt eine Dynode, die mit einer Frequenz bis zu 400 MHz moduliert werden kann, wodurch die Empfindlichkeit des Detektors mit dieser Frequenz verändert wird. Der MPMT wird mit der Trägerfrequenz der akusto optischen Welle im AOM synchron moduliert. Dadurch werden alle optischen Signale, die zeitlich mit dieser Frequenz F1 gleichphasig moduliert sind in ein konstantes elektrisches Signal am Ausgang des MPMT umgewandelt also demoduliert. Trifft hingegen ein konstantes optisches Signal auf den MPMT, so wird dieses im Photomultiplier in ein mit F1 moduliertes elektrisches Signal umgewandelt. Dem MPMT nachgeschaltet ist ein Kurzpassfilter LPF mit dem die modulierten elektrischen Signale heraus gefiltert werden. Der MPMT in Kombination mit dem LPF wirkt somit wie ein Lock in Verstärker, der mit der Frequenz F1 getriggert wird. Jedoch kann mit dieser Anordnung eine Modulationsfrequenz F1 bis zu 400 MHz noch demoduliert werden, da die maximale Frequenz nur durch den MPMT begrenzt wird.

Das am MPMT gemessene Interferenzsignal I ist: $I = B + H \cos(2\pi F_1 t)$, wobei B der Untergrund und H die Signalamplitude des Heterodynsignals ist. Die Verstärkung des MPMT kann wie folgt beschrieben werden: $Gain \cdot [1 + \cos(2\pi F_1 t+\varphi)]$, wobei $\phi$ die relative Phasenverschiebung zwischen der Modulationsfrequenz des MPMT und dem Heterodynsignal ist. Das verstärkte Signal enthält folgende Frequenzkomponenten:

$$\text{DC:} \qquad Gain \cdot \left[ B + \frac{H}{2} \cdot \cos\phi \right]$$

$$\text{bei F1: } Gain \cdot [B \cdot \cos(2\pi \cdot F1 \cdot t + \phi) + H \cdot \cos(2\pi \cdot F1 \cdot t)]$$

$$\text{bei 2·F1:} \qquad Gain \cdot \left[ \frac{H}{2} \cdot \cos(4\pi \cdot F1 \cdot t) \right]$$

d.h. nach Tiefpassfilterung mit LPF erhält man Untergrund B und Signal H/2. Zur Trennung müssen zwei Messungen bei verschiedener Phasenlage durchgeführt werden, z.B. bei $\varphi=0°$ und $180°$. Man erhält dann als DC-Differenzsignal:

$$S = Gain \cdot \left[ B + \frac{H}{2} \cdot \cos(0°) \right] - Gain \cdot \left[ B + \frac{H}{2} \cdot \cos(180°) \right] = Gain \cdot H$$

Alternativ kann auch eine Hochpassfilterung erfolgen, so daß man nur den Anteil bei 2.F1 erhält. Dies bedeutet aber, dass man nun wie nach einer einfachen AC-Kopplung des ursprünglichen (unmoduliert detektierten) Signals gleichrichten und anschließend integrieren muß.

Die Vorzüge der modulierten Detektion (z.B. Phasenempfindlichkeit) kommen also nur im ersten Fall, d.h. bei Messung mit verschiedenen Phasenlagen zum Tragen. Die Phasenlage kann elektronisch mit einem schnellen (z.B. pixelweise, zeilenweise oder bildweise) umschaltbaren Phasenschieber erfolgen. Zusätzlich kann die Umschaltung auch durch eine zusätzliche Phasenplatte, die in den Referenz- oder Objektstrahlengang geschaltet wird erfolgen. Die Phasenplatte kann hierzu auf einem Rad angeordnet werden, so dass mit dieser Anordnung schnelle pixelgenaue Schaltvorgänge vorgenommen werden können.

In einer weiteren Anordnung nach Abb. 6 werden zur Detektion des Heterodynsignals 2 MPMT verwendet, wobei ein MPMT1 optisch wie bereits anhand von Abb. 5 beschrieben angeordnet ist. Der zweite MPMT2 befindet sich am zweiten Transmissionsport (Strahlengang 2A) von BS2 (siehe Abb. 6). Das Signal beider MPMT1/2 wird nach erfolgter Verstärkung und Integration in einem Differenzverstärker (Diff.) voneinander subtrahiert. Durch diese Anordnung erhält man das Heterodynsignal A ohne Hintergrund B. In einer weiteren nicht dargestellten Anordnung wird anstelle eines zweiten MPMT mit Spiegeln das Licht, das MPMT2 erreichen würde zusätzlich auf den MPMT1 gelenkt. Weiterhin kann anstelle eines zweiten MPMT ein schneller Shutter vor dem MPMT1 angeordnet, so dass jeweils nacheinander nur das Licht aus Arm 1A und Arm 2A detektiert wird. Die sequentiell aufgezeichneten Signale bei verschiedenen Phasenlagen werden im Anschluß voneinander im Computer abgezogen.

Mit Hilfe der Scanner erfolgt die Rasterung der Probe, wobei das demodulierte Signal über die Pixelverweilzeit in einem Integrator Int aufsummiert wird. Da die Integrationszeit meist wesentlich länger als die Modulationsfrequenz F1 ist, wirkt der Integrator schon als Kurzpassfilter und LPF kann entfallen.

Die Generierung eines z-Stapels erfolgt durch die Aufnahme von xy-Bildern für verschiedene axiale Positionen des Präparat. Hierzu erfolgt eine Verschiebung des Präparates durch eine Tischfokussierung.

Zur interferometrischen Überlagerung der beiden Teilstrahlen ist eine Anpassung des Referenzstrahls hinsichtlich Polarisation und Strahlparameter und zusätzlich noch eine Anpassung der Leistung an das vom Objekt rückreflektierte Licht notwendig. Die Leistung des Referenzstrahls muss hierzu dynamisch in Abhängigkeit vom Objekt bzw. für verschiedene Eindringtiefen in dasselbe Objekt angepaßt werden. Ein Anpassung der Polarisation und der Strahlparameter erfolgt durch die polarisationserhaltende PM-Faser bzw. durch die Optik hinter der Faser. Durch Variation der Polarisation des Referenzstrahles z.B. durch eine λ/2-Retardierungsplatte oder Rotation der PM-Faser (um kleine Winkel) kann auch ein Polarsiationskontrast nach dem Stand der Technik realisiert werden ("J.F. de Boer, T.E. Milner, M.J.C. van Gemert, J.S. Nelson: Two-dimensional birefringence imaging in biological tissue by polarization-sensitive optical coherence tomography Optics Letters 22(1997), 934-936").Für den Referenzstrahl werden nur wenige Prozent der Gesamtleistung des Lasers über Strahlteiler BS1 ausgekoppelt. Dies kann beispielsweise durch eine Glasplatte, die nahe dem Brewsterwinkel eingestellt ist erfolgen. Über BS2 muss für eine optimale optische Verstärkung typischerweise nur eine Leistung von <1% eingekoppelt werden, so daß das von der Probe rückreflektierte Licht nur minimal abgeschwächt wird. Die Feinanpassung der Leistung im Referenzstrahl wird je nach Leistung des rückreflektierten Lichts und Laserrauschen in der Nähe der Modulationsfrequenz eingestellt. Prinzipiell gibt es folgende Beiträge zum Signal-zu-Rausch-Verhältnis (SNR)

$$SNR = \left( \frac{\Delta_l (1 + \sqrt{A})^2}{2\sqrt{A}} + \frac{\Delta_d}{2\sqrt{A}} \right)^{-1} \qquad (2)$$

wobei $\Delta_l$ das relative Laserrauschen (bei der Modulationsfrequenz innerhalb der Detektionsbandbreite), $\Delta_d$ das relative Detektorrauschen (NEP normiert auf die von der Probe rückreflektierte Lichtleistung $I_s$) und A die optische Verstärkung (Leistung im Referenzarm normiert auf $I_s$) sind. Abb. 7 zeigt für ein angenommenes Laserrauschen von $10^{-3}$ und für verschiedene Werte des Detektorrauschens das SNR, woraus sich für kleine rückreflektierte Leistungen im pW-Bereich, wie sie für biologische Präparate typisch sind, eine optimale Verstärkung von 10 bis 1000 ablesen läßt. Unter diesen Umständen ergibt sich eine optimale Leistung im Referenzarm im Bereich einiger Nanowatt. Die Feinanpassung der Leistung im Referenzarm erfolgt durch ND.

In Abb. 8 ist schematisch eine Anordnung zur Einbindung des in Abb. 5 schematisch gezeigten Aufbaus in ein Laser Scanning Mikroskop dargestellt. Mit diesem Aufbau ist eine simultane Untersuchung der Probe mit Fluoreszenz und Reflexion mittels Heterodyndetektion möglich. Die Fluoreszenz kann hierbei durch eine Einphotonen- oder eine Multiphotonenanregung erzeugt werden. Das System gliedert sich im wesentlichen in die folgenden Teileinheiten: Mikroskop, Scanmodul und Lasermodule. Die Teileinheiten entsprechen in ihrem Aufbau dem in Abb. 2 bereits erläuterten Stand der Technik. Hinzu kommen die anhand von Abb. 5 erläuterten Einheiten. Als spektral breitbandige Lichtquelle dient ein Kurzpulslaser, dessen spektrale Bandbreite einige 10 nm beträgt und der zusätzlich zur Multiphotonenanregung oder SHG Anregung im LSM verwendet wird. Die Änderungen auf dem NIR-Lasermodul betreffen Mittel für die Erzeugung des Referenzstrahls, d.h. die Strahlteilung BS1, ND, DK und die polarisationerhaltende Faser PF1. Das von der Probe rückgestreute bzw. abgestrahlte Fluoreszenzlicht gelangt über den MDB auf verschiedene Nebenfarbteiler DBS 1,2,3. Mit Hilfe der DBS erfolgt eine Aufspaltung der verschiedenen Fluoreszenzsignale und eine Separation der Fluoreszenzen von dem rückgestreuten Anregungslicht des NIR-Lasers. Das rückgestreute Licht gelangt über das PH4 in eine polarisationserhaltende Faser PF2. Das Licht an den Faserausgängen von PF1 und PF2, das dem Objekt ( Meß-) und Referenzstrahlengang des Interferometers entspricht wird an BS2 interferometrisch überlagert und der MPMT mißt wie bereits anhand von Abb. 5 beschrieben das Interferenzsignal. Der AOM dient in dieser Anordnung der schnellen Modulation mit einer Frequenz F1 und der Abschwächung der Intensität zur Anregung einer Multiphotonenfluoreszenz. Der MPMT wird mit F1 über Verbindung MF moduliert. Die Detektion der Reflektion an der Probe, und / oder der Fluoreszenz Muliti- und Einphotonenfluoreszenz) erfolgt nach dem Stand der Technik in den Detektoren PMT1 bis PMT3, PMT5 und / oder TPMT.

Der Faserausgang PF2 kann auch hinter einem der Pinholes PH1-3 oder nicht-descannt anstatt PMT5 oder in Transmission anstatt T-PMT angeordnet sein.

Der Vorteil der Anordnung liegt in der Geschwindigkeit mit der ein Reflexions-Meßsignal erzeugt werden kann, so dass eine synchrone Aufnahme mit einem Fluoreszenzsignal möglich wird. Man hat somit die Möglichkeit das von der Probe rückgestreute Licht und das Fluoreszenzlicht simultan dreidimensional aufgelöst zu messen. Dies ist insbesondere zur Untersuchung von dicken Proben über einen langen Zeitraum sinnvoll, da die Eindringtiefe in der ein konfokales Fluoreszenzsignal mit dem LSM erzeugt werden kann, begrenzt ist. Wird beispielsweise das Wachstum eines Embryos über einen längeren Zeitraum (mehrere Tage) verfolgt (Abb. 4), so kann mit einem konfokalen LSM immer nur die äußere Schale (1) des Embryos untersucht werden. Mit Hilfe des OCT Signal (2) kann jedoch aufgrund der höheren Eindringtiefe meist der gesamte Embryo dreidimensional aufgelöst beobachtet werden. Die mit konfokaler Fluoreszenz untersuchte äußere Schale (1) kann mit dem Reflexionssignal (2) durch die Schaffung von Referenzpunkten RP korreliert werden und somit ist es möglich, dynamische Prozesse, die in der Schale ablaufen besser zu untersuchen. Weiterhin können die Referenzpunkte als Marken verwendet werden, mit denen Bewegungen des Objektes oder des Meßaufbaus bei der Aufnahme von Bildern über längere Zeiträume oder von dreidimensionalen Bildstapeln korrigiert werden.

Abb. 9 zeigt eine weitere Möglichkeit der Einbindung des Aufbaus nach Abb. 5 in ein konfokales Laser Scanning Mikroskop. Dieser entspricht im wesentlichen dem in Abb. 8 beschriebenen. Jedoch befindet sich der MPMT direkt hinter dem PH4. Als BS2 des Interferometers dient hier der Strahlteiler DBS1. PF2 und BS2 können in dieser Anordnung entfallen, wodurch sich eine höhere Effizienz des Strahlengangs zur Abbildung des von der Probe rückgestreuten Lichtes auf den Detektor ergibt.

Wie bereits oben erwähnt muß der Referenzstrahl an den Strahlengang des von der Probe zurück gestreuten Lichtes angepaßt werden. Diese Anpassung kann z.B. in einer weiteren Anordnung auch mit Hilfe eines Spatial Light Modulators (SLM), z.B. Jenoptik SLM640/12) erfolgen, der wie in Abb. 11 gezeigt anstatt oder zusätzlich zu der Dispersionskompensation DK in den Strahlengang eingesetzt wird. Der schematische Aufbau der Dispersionskompensationseinheit mit einem SLM ist in Abb. 10 dargestellt. Das spektral breitbandige Licht der Lichtquelle wird mit einem dispersiven Element, z.B: einem Dispersionsgitter DG1 in seine Spektralanteile zerlegt. Im Anschluß wird mit eine Linse eine Fourierebene erzeugt in der die spektralen Anteile räumlich getrennt vorliegen. In dieser Ebene ist der SLM angeordnet. Durch die Ansteuerung der einzelnen Elemente kann die Phasenlage der spektralen Anteile unabhängig voneinander durch eine Änderung der Brechzahl beeinflußt und damit verschiedene Dispersionen eingestellt werden. Nach dem SLM befindet sich eine weitere Linse und ein DG2, so dass die einzelnen Spektralanteile wieder räumlich überlagert werden.

Zur Funktionsweise wird weiterhin auf DE 19930532 A1 verwiesen.

Die Verwendung dieser Anordnung zur Feinanpassung des Referenzstrahles an den Objektstrahl hat mehrere Vorteile. Zum einen kann der Abgleich der optischen Weglänge schnell ohne mechanische Bewegung von Elementen vorgenommen werden. Zusätzlich ist eine Anpassung der Gesamtdispersion möglich und es steht das gesamte Spektralband der Lichtquelle zur Formung des Interferenzsignals zur Verfügung. Falls die Dispersionen in den beiden Teilstrahlen an BS2 nicht identisch sind kommt es zu einer Einschnürung der spektralen Bandbreite der Lichtquelle. Diese Verringerung der Bandbreite hat eine verschlechterte räumliche Auflösung (siehe Gl. (1)) zur folge. Die Einstellung des SLM kann hierbei in Abhängigkeit von der Eindringtiefe und des verwendeten Präparates mit verschiedenen Algorithmen nach dem Stand der Technik (so genannte Evolutionsalgorithmen oder iterative Verfahren zur Parameteroptimierung) erfolgen, Zusätzlich kann mit der gleichen Einheit eine Optimierung der Pulslänge für den Objektstrahl zur effizienten Anregung einer Multiphotonenfluoreszenz erfolgen, wie in DE 19930532 A1 beschrieben.

In Fig. 11 ist ein derartiger SLM DK1 im Referenzstrahlengang dargestellt.

**Patentansprüche**

1. Anordnung eines optischen Modulators zur schnellen Modulation in einem Interferometerarm einer Interferometeranordnung zur Heterodyndetektion

2. Anordnung nach Anspruch 1, wobei der Modulator im Meßarm des Interferometers angeordnet ist.

3. Anordnung nach einem der vorangehenden Ansprüche ,
wobei der Modulator gleichzeitig zur Schaltung und oder Strahlabschwächung in einem Laser- Scanning- Mikroskop dient.

4. Anordnung nach einem der vorangehenden Ansprüche ,

wobei der Modulator im Referenzarm des Interferometers angeordnet ist und der Meßarm der Beleuchtungsstrahlengang eines Laser- Scanning - mikroskopes ist ( LSM).

5. Anordnung nach einem der vorangehenden Ansprüche, wobei bei einer Modulierung durch den AOM eine Demodulierung durch einen modulierbaren Detektor ( PMT) erfolgt, der mit der Modulationsfrequenz moduliert wird.

6. Anordnung nach einem der vorangehenden Ansprüche ,
   wobei die Lichtquelle ein Kurzpulslaser ist.

7. Anordnung nach einem der vorangehenden Ansprüche ,
   wobei der Laser auch für Multiphotonenanregung und / oder SHG Anrewgung verwendet wird.

8. Anordnung nach einem der vorangehenden Ansprüche ,
   wobei der Modulators ein akustrooptischer Modulator ( AOM) oder elektrooptischer Modulator ( EOM ) ist

9. Anordnung nach einem der vorangehenden Ansprüche ,
   wobei im Interferometerstrahlengang ein Retroreflektor zur Anpassung der optischen Weglänge vorgesehen ist

10. Verfahren zum Betrieb einer Anordnung nach mindestens einem der vorangehenden Ansprüche ,
    wobei das LSM zur Ein- und/ oder Mehrphotonenfluoreszenzbildgebung und die Heterodyndetektion zur Bezugbildung der Fluoreszenz zu Regionen tief in der Probe verwendet wird.

11. Verfahren nach Anspruch 10,
    wobei eine simultane Aufnahme von LSM Bildern und Hetrodynbildern erfolgt.

12. Verfahren nach einem der vorangehenden Ansprüche,
    wobei eine überlagerte Darstellung des LSM Bildes und des Heterodynbildes erfolgt

13. Verfahren nach einem der vorangehenden Ansprüche ,
    wobei Referenzpunkte der Probe zum Ausrichten der Probe bezüglich 3D Bildstapeln des LSM verwendet werden

14. Verfahren nach einem der vorangehenden Ansprüche ,
    wobei Referenzpunkte der Probe zu ihrer Ausrichtung bei Bildaufnahmen zeitlicher Vorgänge verwendet werden.

15. Interferometrische Meßanordnung zur Heterodyndetektion , vorzugsweise in einer Anordnung nach einem der vorangehenden Ansprüche , wobei in mindestens einem Interferometerarm eine dispersive Einheit vorgesehen ist, die das Licht in seine spektralen Bestandteile aufspaltet und diese Bestandteile wieder zusammenführt, die eine Abbildungsoptik aufweist , die die spektralen Bestandteile in eine Brennebene innerhalb der dispersiven Einheit abbildet und in oder in der Nähe der Brennebene ein Lichtmanipulator angeordnet ist, der die spektralen Bestandteile in ihrer Phase und / oder Amplitude ändert.

16. Interferometrische Meßanordnung nach Anspruch 15,
    zur Anpassung der Dispersion

17. Interferometrische Meßanordnung nach Anspruch 15,
    zur Kompensation der Dispersion bei der Einkopplung eines Kurzpulslasers in ein LSM

a.)

UVA

Emission

b.)

NIR

NIR

Emission

Abbildung 1

EP 1 302 803 A2

Abbildung 2

EP 1 302 803 A2

B.)

A.,)

Signal [a.u.]

z [a.u.]

Lock in

PC

BPF

Detektor

Okular

BS

F1

D

Referenz-strahlengang

Lichtquelle

Objektstrahlengang

Probe

Abbildung 3

Objektiv

1

Präparat

2

RP

Abbildung 4

EP 1 302 803 A2

Abbildung 5

EP 1 302 803 A2

Abbildung                                                    6

EP 1 302 803 A2

Abbildung 7

VIS Faser

Kollimator

HeNe Laser

HeNe Laser

Ar-/ArKr Laser

Faserkoppler
AOTF
Shutter

Laser Modul VIS

Freistrahlkopplung oder
Faserkopplung

LF ND

Monitor
Diode

Okular

Scanner

Pinhole
Optik

Scan
Linse

MDB

Tubuslinse

PMT5

HBO

Objektiv

Präparat

Kondensor

HAL

T-PMT

DBS2

DBS1

PF2

PH3
EF3

DBS3

PH4

PMT 3

PH2
EF2

PMT 2

PH1
EF1

PMT 1

BS2

PF1

MPMT

AOM

BS1

Shutter

NIR-Kurzpulslaser

ND

Dispersionskompensation

HF

Laser Modul NIR

HF-
Trigger

MF

Amp

LPF

Int.

S

Mikroskop

Scan Modul

Abbildung

8

Abbildung 9

SLM

rot

blau

DG1

DG2

Eingangsstrahl

Ausgangsstrahl

Abbildung

10

EP 1 302 803 A2

Abbildung 11

EP 1 302 803 A2